# EUROPÄISCHE PATENTSCHRIFT

(11) **EP 4 463 675 B1**
(45) Veröffentlichungstag und Bekanntmachung des Hinweises auf die Patenterteilung: **04.03.2026**
(21) Anmeldenummer: 22817188.0
(22) Anmeldetag: 10.11.2022
(51) Int. Cl.: G01B 11/27

(54) **REFERENZOBJEKT UND VERFAHREN ZUR LAGEBESTIMMUNG VON GLEISACHSEN**
REFERENCE OBJECT AND METHOD FOR DETERMINING THE POSITION OF TRACK AXES
OBJET DE RÉFÉRENCE ET PROCÉDÉ DE DÉTERMINATION DE LA POSITION D'AXES DE VOIES FERRÉES

(30) Priorität: 11.01.2022 AT 500072022
(43) Veröffentlichungstag der Anmeldung: 20.11.2024
(73) Patentinhaber: Döller, Herbert, 3950 Gmünd (AT)
(72) Erfinder: Döller, Herbert, 3950 Gmünd (AT)
(74) Vertreter: KLIMENT & HENHAPEL
(86) Internationale Anmeldenummer: PCT/EP2022/081420
(87) Internationale Veröffentlichungsnummer: WO 2023/134901

(56) Entgegenhaltungen:
- US-A1- 2020 408 506
- US-B2- 11 092 667
- HURNÍK JAKUB ET AL: "Circular coded target system for industrial applications", MACHINE VISION AND APPLICATIONS, vol. 32, no. 1, 15 January 2021 (2021-01-15), XP037335343, ISSN: 0932-8092, DOI: 10.1007/S00138-020-01159-1

## Beschreibung

Die Erfindung betrifft ein Referenzobjekt zur Lagebestimmung realer oder geometrischer Objekte von Schienenanlagen relativ zu einem Referenzpunkt des Referenzobjektes durch Detektion einer durch Wechselwirkung eines elektromagnetischen Messsignals mit dem Referenzobjekt entstandenen Messgröße mittels aktiver und/oder passiver Sensoren, gemäß dem Oberbegriff von Anspruch 1. Die Erfindung betrifft ferner ein Verfahren zur Lagebestimmung realer oder geometrischer Objekte von Schienenanlagen relativ zu einem Referenzpunkt eines erfindungsgemäßen Referenzobjekts, gemäß dem Oberbegriff von Anspruch 4.

Bei Schienenanlagen ist insbesondere die Bestimmung der genauen Lage der Gleisachse eine zentrale Aufgabe, um Abweichungen der IST-Lage einer Gleisachse von einer SOLL-Lage detektieren zu können. Eine solche Abweichung ergibt sich im Betrieb der in der Regel stark belasteten Schienenanlage beispielsweise dadurch, dass sich das Gleis setzt und die Gleisachse folglich eine veränderte Höhenlage aufweist. In solchen Fällen kann es erforderlich sein, das Gleis im betreffenden Abschnitt der Schienenanlage in seiner Lage neu zu justieren, da das Gleis fahrdynamische Vorgaben für den Schienenbetrieb umsetzen muss und die präzise Lage des Gleises dafür entscheidend ist. Die Gleisachse stellt im Rahmen der gegenständlichen Anmeldung ein geometrisches Objekt dar, dessen Lage im Rahmen der vorliegenden Erfindung zu bestimmen ist, und eine Schiene ein reales Objekt.

Für die Lagebestimmung einer Gleisachse werden in herkömmlicher Weise Referenzobjekte in Form von kleinen Bolzen herangezogen, die an Fahrleitungsmasten oder anderen geeigneten, dauerhaft eingerichteten Objekten wie entsprechende Pfähle bei nicht-elektrifizierten Gleisabschnitten oder Bahnsteigmauern oder Gebäude etwa im Bahnhofsbereich befestigt sind. Ein Bolzen definiert an definierter Stelle einen Referenzpunkt, dessen Absolutkoordinaten geodätisch vermessen wurden. In weiterer Folge können der Abstand und der Höhenversatz der Gleisachse relativ zum Bolzen gemessen werden, was manuell erfolgen kann, oder mithilfe von Messvorrichtungen, die am Gleis geführt werden. Diese Messvorrichtungen verfügen über aktive oder passive Sensoren, deren Relativlage zu dem zu vermessenden realen oder geometrischen Objekt bekannt ist und die mit dem Referenzobjekt wechselwirkende elektromagnetische Messsignale auswerten und Messgrößen bestimmen, aus denen die Relativlage der Sensoren zum Referenzpunkt ermittelt werden kann. So sind beispielsweise Laserdistanzmesser oder Laserscanner bekannt, bei denen es sich um aktive Sensoren handelt, die mit Laserlicht als elektromagnetisches Messsignal arbeiten. Des Weiteren sind auch ToF (*"Time of* flight")-Kameras bekannt, die neben einem zweidimensionalen Abbild eines Objekts auch Tiefeninformation ermitteln und sich hierfür einer eigenen Lichtquelle, in der Regel einer Infrarot-Lichtquelle, bedienen. Auch diese Sensoren stellen aktive Sensoren dar, die mit Licht im Infrarot-Bereich als elektromagnetisches Messsignal arbeiten. Eine Kamera, die das vom Referenzobjekt reflektierte natürliche Umgebungslicht detektiert, wäre hingegen ein passiver Sensor, und das entsprechende Messsignal das vom Referenzobjekt reflektierte Umgebungslicht. Die zur Lagebestimmung herangezogene Messgröße wäre in den oben genannten Beispielen der aktiven Sensoren die Laufzeit des emittierten Lichts, und für das oben genannte Beispiel eines passiven Sensors etwa die Intensität des reflektierten Lichts.

Die Lagebestimmung der Gleisachse mithilfe berührungsloser Sensorik kann dabei entweder von einem ruhenden Sensor vorgenommen werden, oder von einem bewegten Sensor. Bei einer Lagebestimmung über einen ruhenden Sensor wird entweder stationär gemessen, oder mit einem entsprechend ausgerüsteten Messwagen am Gleis, der von einem Bolzen zum nächsten bewegt wird, um an jedem Bolzen in ruhender Lage die erforderlichen Messungen vorzunehmen, was entsprechend zeitaufwändig ist. Moderne Schienenanlagen stellen allerdings stark genutzte Infrastruktur dar, sodass die Behinderung eines Gleises durch Vermessungsarbeiten so kurz wie möglich gehalten werden muss. Zudem ist der Aufenthalt auf den Gleisen oder in Gleisnähe ein sicherheitskritischer Vorgang, der zur Minimierung des Sicherheitsrisikos auch aus diesem Grund so kurz wie möglich gehalten werden sollte. Das betrifft insbesondere den Aufenthalt auf den Gleisen, wo auch vom Gefahrenraum gesprochen wird, aber auch den Aufenthalt in Gleisnähe zwischen den Fahrleitungsmasten, wo auch vom Sicherheitsraum gesprochen wird. Räumlich begrenzte Gleisabschnitte wie Tunnel, Brücken, etc. stellen dabei eine besondere Herausforderung dar.

Daher wäre eine Lagebestimmung mit einem bewegten Sensor zu bevorzugen, weil der Messvorgang für das Gleis rascher vor sich gehen kann und die Verweildauer auf dem Gleis daher verkürzt werden kann. Entsprechende Messverfahren wurden zwar bereits vorgeschlagen, erwiesen sich aber bislang als wenig praktikabel.

Ein Grund dafür liegt darin, dass die als Referenzobjekte verwendeten Bolzen einerseits der Verschmutzung ausgesetzt sind und andererseits Beschädigungen beispielsweise durch Schotterflug unterliegen. Verschmutzungen ändern zwar die Absolutposition des Bolzens nicht, beeinträchtigen aber die genaue Ermittlung des Referenzpunktes. Bei einer Messung mit ruhendem Sensor kann der Bolzen vor der Messung gereinigt werden, bei einer Messung mit bewegtem Sensor - gewissermaßen "im Vorbeifahren" - ist das aber nicht mehr möglich. Das Ergebnis sind in diesem Fall mangelhafte bis unbrauchbare Messergebnisse. Relevanter Stand der Technik ist US 11 092 667 B2.

Beschädigungen des Bolzens können auch die Absolutposition ändern, sodass der für die Messung der Gleislage verwendete Referenzpunkt nicht mehr der eingemessenen Position entspricht. Als Folge werden vermeintliche Änderungen der Gleislage ermittelt, obwohl sich eigentlich der Referenzpunkt verschoben hat. Es ist mit bestehenden Verfahren auch kaum möglich die Qualität der Lagebestimmung der Gleisachse zu beurteilen, also etwa die Zuverlässigkeit der für die Lagebestimmung verwendeten Referenzpunkte zu beurteilen.

Es ist daher das Ziel der Erfindung die Qualität der Lagebestimmung von realen oder geometrischen Objekten, insbesondere der Gleisachse, von Schienenanlagen zu verbessern. Insbesondere soll dabei auch eine Lagebestimmung mit bewegtem Sensor möglich sein.

Diese Ziele werden durch die Merkmale von Anspruch 1 erreicht. Anspruch 1 bezieht sich auf ein Referenzobjekt zur Lagebestimmung realer oder geometrischer Objekte von Schienenanlagen relativ zu einem Referenzpunkt des Referenzobjektes durch Detektion einer durch Wechselwirkung eines elektromagnetischen Messsignals mit dem Referenzobjekt entstandenen Messgröße mittels aktiver und/oder passiver Sensoren. Erfindungsgemäß wird vorgeschlagen, dass es als plattenförmiger Träger mit einer Montageseite und einer gegenüberliegenden Messseite ausgeführt ist, wobei der Träger mit einem RFID-Transponder, dessen Datenspeicher eine den Träger eindeutig identifizierende Identifizierungsinformation enthält, versehen ist, und die Oberfläche des plattenförmigen Trägers auf der Messseite eine Messfläche mit aneinander grenzenden Flächenbereichen, die jeweils in Wechselwirkung mit dem Messsignal einer konstanten Messgröße entsprechen, die sich für aneinander grenzende Flächenbereiche unterscheidet, aufweist, und die Grenzlinien aneinander grenzender Flächenbereiche oder deren gedachte Verlängerungen sich in einem für den Träger eindeutigen Referenzpunkt für die Lagebestimmung schneiden. Der plattenförmige Träger kann mit seiner Montageseite direkt am Fahrleitungsmast befestigt werden und liegt somit flach am Fahrleitungsmast an. Das erfindungsgemäße Referenzobjekt unterliegt daher kaum Verschmutzungen, zudem können Verschmutzungen abregnen. Auch gegenüber Beschädigungen ist das flach am Fahrleitungsmast anliegende Referenzobjekt weniger anfällig, als ein vom Fahrleitungsmast in den Sicherheitsraum abstehender Bolzen. Zudem reduziert die erfindungsgemäße Ausführung der Messfläche die Beeinträchtigung der Messung gegenüber Verschmutzung und Beschädigung, da die Messung auf bildverarbeitenden Verfahren der Kantenextraktion von Grenzlinien aneinander grenzender Flächenbereiche des Referenzobjekts beruht, wie noch näher ausgeführt werden wird, und Verschmutzungen oder Beschädigungen auf das Messergebnis keine Auswirkungen haben, solange sich ein Schnittpunkt der Grenzlinien oder deren Verlängerungen als Referenzpunkt ermitteln lässt. Die erfindungsgemäße Ausführung der Messfläche ermöglicht zudem eine eindeutige Definition des Referenzpunktes, der bei jeder Messung neu detektiert wird, im Gegenteil zu herkömmlichen Verfahren auf Basis eines Bolzens, bei denen ein Referenzpunkt zumeist durch Mittelung mit variierender Genauigkeit errechnet werden muss. Mithilfe der vom RFID-Transponder abrufbaren Identifizierungsinformation kann zudem jedem Referenzobjekt eine zuvor gemessene Absolutposition zugewiesen werden, sowie eine gemessene Relativlage für die lokale Gleisachse. Ein durch ein Referenzobjekt repräsentierter Referenzpunkt kann sich aber auch auf mehrere Gleise beziehen, beispielsweise in einem Bahnhofsbereich, wobei die Zuordnung zu den jeweils betroffenen Gleisen über die Identifizierungsinformation in einer entsprechenden Datenbank organisiert ist und über eine entsprechende RFID-Abfrage abgerufen werden kann. Es kann somit eine lokale Messung der Relativlage mit einem bestimmten Referenzobjekt verknüpft werden, dessen Absolutposition für die jeweilige Gleisachse oder mehrere Gleisachsen bekannt ist. Es lässt sich daher bei bewegtem Sensor ein Datensatz generieren, der auch einer nachfolgenden Analytik zugänglich ist. Die Überprüfung der Gleislage lässt sich somit durch wiederholtes Befahren einer Gleisstrecke verbessern, weil sich aufeinander folgende Messungen der Relativlage der Gleisachse miteinander vergleichen lassen. Durch eine Analytik des gesamten Datensatzes lässt sich etwa eruieren, ob Abweichungen der Messungen auf eine veränderte Lage der Referenzpunkte oder auf eine tatsächliche Änderung der Gleislage zurückzuführen sind, wie noch näher ausgeführt werden wird. Es kann in diesem Zusammenhang auch von einem Abbild der Schieneninfrastruktur im digitalen Raum gesprochen werden, das durch die gegenständliche Erfindung bewerkstelligt wird.

Eine mögliche Ausführung des Referenzobjekts besteht darin, dass die aneinander grenzenden Flächenbereiche jeweils sektorenförmig mit radial auf den den Referenzpunkt bildenden, gemeinsamen Schnittpunkt zulaufenden Grenzlinien ausgeführt sind. Der plattenförmige Träger ist hierfür vorzugsweise mit quadratischer oder kreisförmiger Kontur ausgeführt, deren Mittelpunkt den Referenzpunkt bildet. Es ist ausreichend, wenn sich die Grenzlinien nicht tatsächlich schneiden, sondern nur deren geometrische Verlängerungen, weil der Referenzpunkt bei bekannter Lage der Grenzlinien als deren Schnittpunkt auch rechnerisch ermittelt werden kann. Es ist sogar möglich, dass der plattenförmige Träger im Bereich des Referenzpunktes mit einer zentralen Öffnung versehen ist, die beispielsweise als zentrische Gewindebohrung oder auch als beliebig ausgeformte, zentrische Befestigungsöffnung wie Lochbohrung, Vierkant oder dergleichen ausgeführt ist, um den plattenförmigen Träger beispielsweise mit einem zentralen Dübel befestigen zu können. Entscheidend ist hingegen, dass sich die aneinander grenzenden Flächenbereiche im Zuge der Messung gut voneinander unterscheiden lassen, indem der Wert der mit dem jeweiligen Flächenbereich verbundenen Messgröße für aneinander grenzende Flächenbereiche deutlich unterschiedliche Werte annimmt. Eine Möglichkeit besteht etwa darin, dass die aneinander grenzenden Flächenbereiche als weiße und schwarze Flächenbereiche ausgeführt sind, wobei die Grenzlinien jeweils einen schwarzen von einem weißen Flächenbereich trennen. Eine gute Erkennbarkeit bietet etwa die Verwendung von vier weißen Flächenbereichen, zwischen denen vier schwarze Flächenbereiche angeordnet sind. Bei der Messgröße handelt es sich in diesem Fall um die Reflektivität. Es wäre aber auch denkbar unterschiedliche Farben für die Flächenbereiche zu verwenden. In diesem Fall würde es sich bei der Messgröße um den Farbwert handeln.

Wie noch näher ausgeführt werden wird, können diese Flächenbereiche mithilfe von Kameras, insbesondere Stereokameras oder Mehrfachkameras, detektiert und mithilfe nachfolgender Bildverarbeitung ausgewertet werden. Diese Messung eines passiven Sensors kann mit einer Messung eines aktiven Sensors unterstützt werden, beispielsweise mithilfe eines Laserscanners, um ergänzende oder redundante Messungen zu erhalten. Hierfür wird vorgeschlagen, dass die Messfläche Reflexionsbereiche aufweist, die symmetrisch um den Referenzpunkt angeordnet sind und eine im Vergleich zu den verbleibenden Bereichen der Messfläche erhöhte Reflektivität aufweisen. Im Fall der oben genannten Ausführung mit schwarzen und weißen Flächenbereichen sind die Reflexionsbereiche vorzugsweise als kreisrunde Bereiche innerhalb der schwarzen Flächenbereiche ausgeführt.

Des Weiteren wird ein Verfahren zur Lagebestimmung realer oder geometrischer Objekte von Schienenanlagen relativ zu einem Referenzpunkt eines erfindungsgemäßen Referenzobjekts vorgeschlagen, wobei von relativ zum realen oder geometrischen Objekt in bekannter relativer Lage liegenden aktiven und/oder passiven Sensoren mit dem Referenzobjekt wechselwirkende elektromagnetische Messsignale ausgewertet und Messgrößen gewonnen werden, aus denen die Relativlage der Sensoren zum Referenzpunkt ermittelt wird. Hierbei wird vorgeschlagen, dass mittels der aktiven und/oder passiven Sensoren ein digitales Abbild der Messfläche des Referenzobjekts erzeugt wird, und mithilfe des bildverarbeitenden Verfahrens der Kantenextraktion die Grenzlinien aneinander grenzender Flächenbereiche sowie der Schnittpunkt der Grenzlinien oder deren Verlängerungen als Referenzpunkt aus dem digitalen Abbild ermittelt werden, wobei die Identifizierungsinformation aus dem RFID-Transponder des Referenzobjekts ausgelesen und gemeinsam mit der für das Referenzobjekt ermittelten Lage des realen oder geometrischen Objekts relativ zum Referenzpunkt des Referenzobjekts in einer Datenbank gespeichert wird. Das erfindungsgemäße Verfahren bedient sich bekannten Methoden zur Lagebestimmung, nutzt aber die erfindungsgemäße Ausführung des Referenzobjektes für die exakte Ermittlung des Referenzpunktes zur genaueren Lagebestimmung mithilfe des bildverarbeitenden Verfahrens der Kantenextraktion. Die Kantenextraktion dient in bekannter Weise der Segmentierung von Elementen eines digitalen Abbilds, bei der Flächenbereiche des digitalen Abbilds identifiziert werden sollen, die sich entlang gerader oder gekrümmter Grenzlinien ausreichend in einer Messgröße wie Farb- oder Grauwert, Helligkeit, Reflektivität oder Textur unterscheiden. Dabei werden spezielle Kantenoperatoren verwendet, die Übergänge zwischen den Flächenbereichen erkennen und als Kanten markieren. Zugleich soll aber ein einzelner Flächenbereich mit homogener Messgröße als solcher erkannt werden und nicht fälschlicher Weise durch eine Kante in zwei Flächen geteilt werden. Bei Verwendung eines Grauwerts als Messgröße, beispielsweise bei Verwendung schwarzer und weißer Flächenbereiche, berechnet ein Kantendetektor den Grauwertgradienten an jedem einzelnen Pixel des digitalen Abbilds durch Untersuchung eines den Pixel umgebenden Bereiches. Dieser Vorgang erfolgt durch die mathematische Operation einer diskreten Faltung des digitalen Abbilds mit einer Faltungsmatrix, dem so genannten Kantenoperator. Der Kantenoperator definiert die Größe des zu untersuchenden Umgebungsbereiches eines Pixels und die Gewichtung, mit der die einzelnen Pixel des zu untersuchenden Umgebungsbereiches in die Berechnung eingehen. Der Kantenoperator ermittelt somit für das zentrale Pixel einen mittleren Gradienten für den Umgebungsbereich. Für ein Pixel innerhalb eines weißen oder schwarzen Flächenbereiches wird dieser Gradient somit sehr klein sein. Für ein Pixel entlang einer Grenzlinie wird dieser Wert maximal sein. Wird diese Operation für alle Pixel des digitalen Abbilds durchgeführt, so kann aus der resultierenden Matrix der Gradienten ein neues Bild generiert werden, das Kantenbild genannt wird. Im Kantenbild heben sich die Grenzlinien zwischen zwei aneinander grenzenden Flächenbereichen deutlich ab. Durch eine nochmalige Anwendung des Kantenoperators auf das Kantenbild kann die Kantendetektion in der Regel noch verbessert werden. Bei einem eigens für die Kantenextraktion vorgesehenen Objekt wie jenes des erfindungsgemäßen Referenzobjekts kann eine sehr präzise Detektion der Grenzlinien als Kanten erfolgen. Nach der Lokalisierung der Grenzlinien können sie zur Ermittlung des erfindungsgemäßen Referenzpunktes rechnerisch geschnitten werden. Mithilfe des auf diese Weise exakt ermittelten Referenzpunktes kann in weiterer Folge auf bekannte Weise die Lagebestimmung der Gleisachse erfolgen.

Das digitale Abbild der Messfläche des Referenzobjekts wird vorzugsweise mithilfe eines Kamerasystems in Stereo- oder Mehrfachanordnung erzeugt. Bei einer Stereokamera oder Mehrfachkamera wird die Umgebung mit zwei oder mehreren Kameras gleichzeitig aufgenommen. Anhand dieser Bilder kann in einer nachfolgenden Bildverarbeitung die Distanz zu Objekten gemessen werden. Bei den Kameras selbst handelt es sich etwa um Digitalkameras mit zweidimensionalen CCD-Array-Sensoren, die mit vorgegebener Verschlusszeit arbeiten. Bei geöffneter Blende wird der CCD-Array-Sensor belichtet, und bei anschließend geschlossener Blende das CCD-Array ausgelesen. Die Kamera ist beispielsweise auf einem auf dem Gleis geführten Messwagen befestigt. Bei hinreichend langsamer Fahrtzeit kann die Blende der Kamera manuell bedient werden. Alternativ kann auch eine automatische Steuerung des Erfassungsprozesses mithilfe geschwindigkeitsabhängiger oder wegkonstanter Aufnahmepositionen erfolgen, wobei die Belichtung als Kombination aus Blende und Verschlusszeit für die Kameras und die Abtastrate des Laserscanners zeitlich synchronisiert werden. Insbesondere bei Wiederholungs- oder Kontrollmessungen ist es aber auch denkbar die Steuerung des Erfassungsprozesses mit der Detektion des RFID-Transponders zu koppeln, wobei nach Detektion und Auslesen eines RFID-Transponders die Kameras zum Anfertigen eines digitalen Abbilds des Referenzobjekts aktiviert wird, oder nach einer sonstigen Detektion des Referenzobjekts. In diesem Fall sind die Positionen zumindest näherungsweise aus vorherigen Messungen bekannt und die Erfassung kann effizienter erfolgen, wodurch Datenvolumen verringert werden können und höhere Abtastraten im Kurzzeitbereich erzielt werden können.

Eine weitere Möglichkeit besteht darin die Aufnahme eines digitalen Abbilds des Referenzobjekts mit einer weiteren Messung ergänzend oder redundant zu verbinden, beispielsweise mithilfe eines Laserscanners und der Reflexionsbereiche. Bei einem Laserscanner wird der Umgebungsraum in Profilabfolge punktweise gesamt oder in Ausschnitten geometrisch und mit Zusatzinformation, wie etwa der Reflektivität der Oberfläche, erfasst. Dabei wird Laserlicht auf das Referenzobjekt gerichtet und durch die Reflexionsbereiche reflektiert. Das reflektierte Lasersignal kann über Laufzeitmessungen oder mithilfe der Kamera und nachfolgender Bildverarbeitung ausgewertet und zur Lagebestimmung verwendet werden.

Die lokal ermittelte Lage der Gleisachse wird erfindungsgemäß mit der für das betreffende Referenzobjekt eindeutigen Identifizierungsinformation verknüpft und gespeichert. Diese Vorgangsweise hat unter anderem den Vorteil, dass die Bildverarbeitung und -analyse auch zu einem späteren Zeitpunkt durchgeführt werden kann, oder zu einem späteren Zeitpunkt wiederholt werden kann, da jedes Messergebnis eindeutig einem bestimmten Referenzobjekt zugeordnet werden kann und die genaue Absolutposition eines jeden Referenzobjekts bekannt ist. Mit anderen Worten kann eine nachfolgende Analytik auch anhand des digitalen Abbilds der Schieneninfrastruktur im digitalen Raum erfolgen.

Insbesondere wird vorgeschlagen, dass die Lagebestimmung für eine Vielzahl von entlang der Schienenanlage angeordneten Referenzobjekten zur Generierung eines Referenzpunkt-Datensatzes mit einer Vielzahl an Referenzpunkten entlang der Schienenanlage wiederholt wird. Diese digitale Darstellung der Schienenanlage eröffnet neue Möglichkeiten der Analyse. So ist es etwa möglich, dass die Lagebestimmung für eine Vielzahl von entlang der Schienenanlage angeordneten Referenzobjekten zur Generierung eines weiteren Referenzpunkt-Datensatzes zu einem späteren Zeitpunkt wiederholt wird, und durch Vergleich der Referenzpunkt-Datensätze bei einer einzelnen Abweichung der für ein Referenzobjekt ermittelten Lage des realen oder geometrischen Objekts eine veränderte Lage des Referenzobjekts beispielsweise infolge einer Beschädigung des Referenzobjekts ermittelt wird, und bei Abweichungen der für eine Mehrzahl an Referenzobjekten ermittelten Lage des realen oder geometrischen Objekts eine veränderte Lage des realen oder geometrischen Objekts ermittelt wird. Letzteres ist insbesondere hinsichtlich einer räumlich benachbarten Gruppe von Referenzobjekten relevant, die beispielsweise eine Bewegungszone, ein Baulos oder einen räumlich abgegrenzten Setzungs- oder Rutschungsbereich identifiziert. Gegebenenfalls können dabei auch Kriterien zur Diskriminierung von Messfehlern angewendet werden. Zudem besteht auch die Möglichkeit die an den Referenzobjekten angeordneten RFID-Transponder auch mit einem überschreibbaren Speicherbereich zu versehen, sodass eine lokal gemessene Lageinformation der Gleisachse im betreffenden Referenzobjekt abgespeichert und für weiterführende Anwendungen beispielsweise im Rahmen von fachbereichsübergreifenden Anwendungen und Prozessen verwendet werden kann. Eine ermittelte Lageinformation steht somit bei einem späteren Messvorgang lokal für Analysezwecke zur Verfügung.

Das erfindungsgemäße Verfahren eröffnet somit Möglichkeiten zur Qualitätssicherung und Qualitätskontrolle der Vermessung einer Gleisachse, die bei herkömmlichen Messverfahren nicht zur Verfügung stehen. Das erfindungsgemäße Verfahren ist zudem auch in Situationen anwendbar, in denen keine satellitengestützte Positionsbestimmung möglich ist, beispielsweise aufgrund mangelnder Satellitensignalgüte in topografisch oder baulich beeinträchtigten Sicherheitsbereichen, etwa in Tunnel.

Die Erfindung wird in weiterer Folge anhand von Ausführungsbeispielen mithilfe der beiliegenden Figuren näher erläutert. Es zeigen hierbei die
Fig. 1a-d unterschiedliche Ausführungen der Messfläche eines erfindungsgemäßen Referenzobjekts,
Fig. 2a-d perspektivische Ansichten unterschiedlicher Ausführungen eines erfindungsgemäßen Referenzobjekts,
Fig. 3 eine schematische Darstellung zur Erläuterung des erfindungsgemäßen Verfahrens, und die
Fig. 4 eine schematische Darstellung zur Erläuterung des erfindungsgemäßen Verfahrens von oben gesehen mit zwei Gleisen.

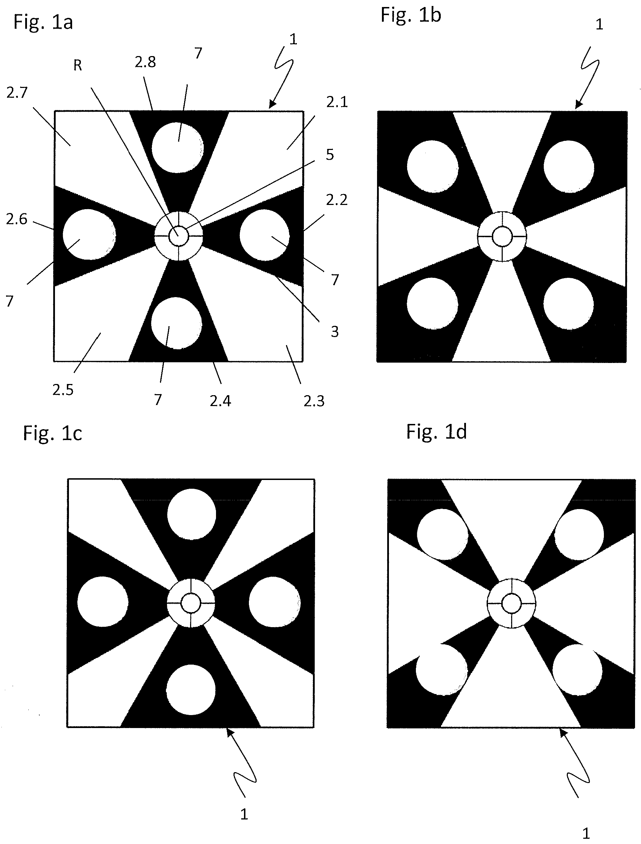

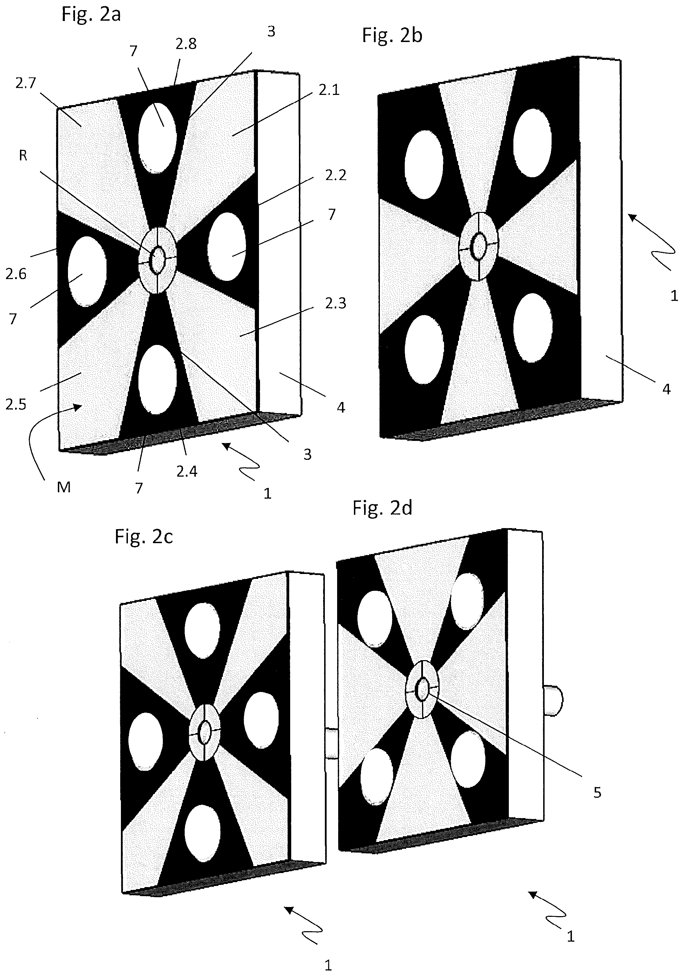

Zunächst wird auf die Fig. 1 und 2 Bezug genommen, die unterschiedliche Ausführungen eines erfindungsgemäßen Referenzobjekts 1 zeigen. Die Fig. 1a-d zeigen dabei jeweils eine Vorderansicht der Referenzobjekte 1 mit Blick auf die Messfläche M und deren Ausführung. Die Messfläche M weist jeweils aneinander grenzende Flächenbereiche 2.i (i=1,2,...8) auf, die in der gezeigten Ausführungsform jeweils sektorenförmig mit radial auf einen gemeinsamen Schnittpunkt im Mittelpunkt der Messfläche M zulaufenden Grenzlinien 3 ausgeführt sind. Die Grenzlinien 3 schneiden sich dabei in ihren jeweils gedachten Verlängerungen im Zentrum der Messfläche M. Dieser Schnittpunkt bildet den Referenzpunkt R des jeweiligen Referenzobjekts 1. In der gezeigten Ausführungsform ist der plattenförmige Träger 4 des jeweiligen Referenzobjekts 1 im Bereich des Referenzpunktes R mit einer zentralen Öffnung 5 versehen, die beispielsweise als zentrische Gewindebohrung oder auch als beliebig ausgeformte, zentrische Befestigungsöffnung wie Lochbohrung, Vierkant oder dergleichen ausgeführt sein kann, um den plattenförmigen Träger 4 mithilfe von Dübel befestigen zu können. Die Befestigung der Träger 4 kann auch in einer zu den herkömmlichen Bolzen 6 bekannten Lagebeziehung erfolgen, indem beispielsweise eine zur Montage verwendete Schablone verwendet wird, die eine direkte Bestimmung der Abstände zwischen dem Bezugspunkt am Bolzen 6 und dem Referenzpunkt R ermöglicht. Alternativ kann auch eine Ausführungsvariante des Referenzobjekts 1 mit dauerhafter Koppelung zwischen dem Bolzen 6 und dem Referenzpunkt R des Referenzobjekts 1 eingesetzt werden. Die im Zuge der Montage einmalig ermittelten Abstände werden in einer Datenbank gespeichert und stehen damit direkt zur Verfügung. Wie den Fig. 1 und 2 entnommen werden kann, ist es ausreichend, wenn sich die Grenzlinien 3 nicht tatsächlich schneiden, sondern nur deren geometrische Verlängerungen, weil der Referenzpunkt R bei bekannter Lage der Grenzlinien 3 als deren Schnittpunkt auch rechnerisch ermittelt werden kann.

Die aneinander grenzenden Flächenbereiche 2.i sind so ausgeführt, dass sie sich im Zuge der Messung gut voneinander unterscheiden lassen, indem der Wert der mit dem jeweiligen Flächenbereich 2.i verbundenen Messgröße für aneinander grenzende Flächenbereiche 2.i deutlich unterschiedliche Werte annimmt. In den Ausführungsformen gemäß der Fig. 1 und 2 sind die aneinander grenzenden Flächenbereiche 2.i als vier weiße Flächenbereiche 2.1, 2.3, 2.5, 2.7 und als vier schwarze Flächenbereiche 2.2, 2.4, 2.6, 2.8 ausgeführt, wobei zwischen den vier weißen Flächenbereichen 2.1, 2.3, 2.5, 2.7 jeweils ein schwarzer Flächenbereich 2.2, 2.4, 2.6, 2.8 angeordnet ist und entlang der Grenzlinien 3 aneinander grenzen. Somit treten in der gezeigten Anordnung jeweils acht Grenzlinien 3 auf. Bei der Messgröße handelt es sich in diesem Fall um die Reflektivität.

Die Messfläche M weist ferner Reflexionsbereiche 7 auf, die symmetrisch um den Referenzpunkt R angeordnet sind und eine im Vergleich zu den verbleibenden Bereichen der Messfläche M erhöhte Reflektivität aufweisen. Die Reflexionsbereiche 7 sind in den Ausführungsformen gemäß der Fig. 1 und 2 als kreisrunde Bereiche innerhalb der schwarzen Flächenbereiche 2.2, 2.4, 2.6, 2.8 ausgeführt.

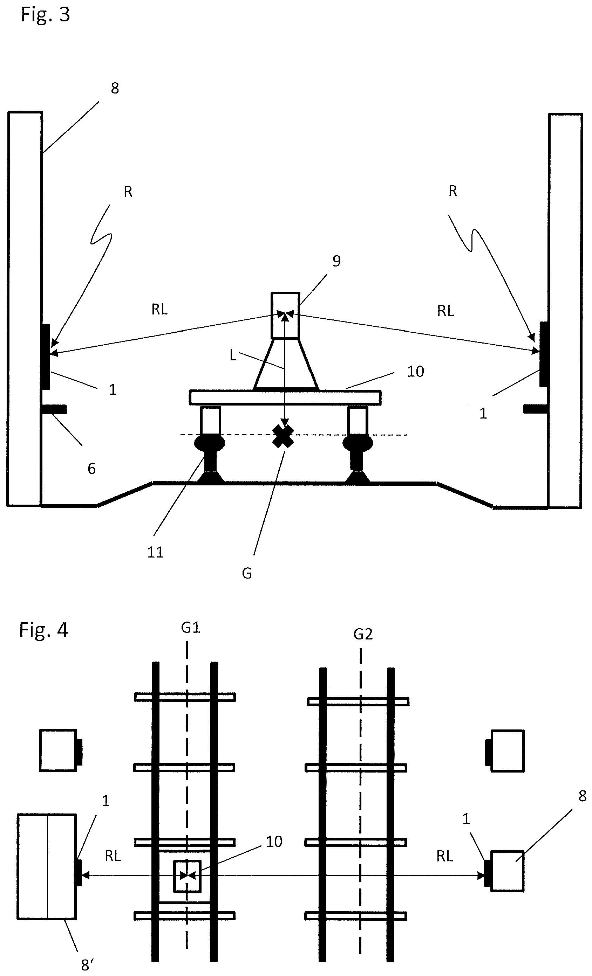

Die Messfläche M definiert die Messseite des plattenförmigen Trägers 4, der in den Ausführungsformen gemäß der Fig. 1 und 2 mit quadratischer Kontur ausgeführt ist, deren Mittelpunkt den Referenzpunkt R bildet. Die Absolutkoordinaten des Referenzpunktes R und allfällig weitere Zusatzangaben wie etwa Messzeitpunkt, Reflektivität oder die räumliche Orientierung der Messfläche M sind beispielsweise aufgrund einer vorherigen geodätischen Vermessung bekannt. Der plattenförmige Träger 4 ist ferner mit einem RFID-Transponder versehen, in dem eine für das betreffende Referenzobjekt 1 eindeutige Identifizierungsinformation gespeichert ist. Des Weiteren können auch die Absolutkoordinaten des entsprechenden Referenzpunktes R im RFID-Transponder gespeichert sein. Der plattenförmige Träger 4 kann etwa aus einem gegenüber Witterungseiflüssen resistenten und gegenüber Alterung beständigen Kunststoff gefertigt sein und wird an seiner der Messseite gegenüberliegenden Seite, die hier auch als Montageseite bezeichnet wird, beispielsweise an einem Fahrleitungsmast 8 befestigt, beispielsweise direkt am Fahrleitungsmast 8 über eine Klebe- oder Schraubverbindung (siehe auch Fig. 3). Alternativ besteht auch die Möglichkeit das Referenzobjekt 1 in Verbindung mit einem Dübel am Fahrleitungsmast 8 zu befestigen, wie in den Fig. 2c und 2d angedeutet ist. Die Fig. 2 zeigen dabei die Ausführungen des Referenzobjekts 1 gemäß der Fig. 1 in perspektivischer Ansicht.

Die Flächenbereiche 2.i können mithilfe von Sensoren 9 detektiert und mithilfe nachfolgender Bildverarbeitung ausgewertet werden, wie anhand der Fig. 3 erläutert wird. Der Sensor 9 ist beispielsweise auf einem auf dem Gleis 11 geführten Messwagen 10 befestigt und in der gezeigten Ausführungsform als Stereokamera mit zweidimensionalen CCD-Array-Sensoren ausgeführt, die mit vorgegebener Verschlusszeit arbeiten. Bei geöffnetem Verschluss wird der CCD-Array-Sensor belichtet, und bei anschließend geschlossenem Verschluss das CCD-Array ausgelesen. Hierfür ist vorzugsweise eine automatische Steuerung des Erfassungsprozesses mithilfe geschwindigkeitsabhängiger oder wegkonstanter Aufnahmepositionen vorgesehen, wobei die Belichtung als Kombination aus Blende und Verschlusszeit für die Kameras und die Abtastrate des Laserscanners zeitlich synchronisiert werden. Insbesondere bei Wiederholungs- oder Kontrollmessungen ist es aber auch denkbar die Steuerung des Erfassungsprozesses mit der Detektion des RFID-Transponders zu koppeln, wobei nach Detektion und Auslesen eines RFID-Transponders die Kameras zum Anfertigen eines digitalen Abbilds des Referenzobjekts 1 aktiviert wird, oder nach einer sonstigen Detektion des Referenzobjekts 1.

Die Referenzobjekte 1 bieten in ihrer gezeigten Ausführungsform des Weiteren die Möglichkeit, die Aufnahme eines digitalen Abbilds des Referenzobjekts 1 mit einer weiteren Messung ergänzend oder redundant zu verbinden, beispielsweise mithilfe eines Lasersignals und der Reflexionsbereiche 7. Dabei wird Laserlicht auf das Referenzobjekt 1 gerichtet und durch die Reflexionsbereiche 7 reflektiert. Das reflektierte Laserlicht kann über Laufzeitmessungen und weiterer Sensoren 9 oder mithilfe der Stereokamera und nachfolgender Bildverarbeitung ausgewertet und zur Lagebestimmung verwendet werden.

Gemeinsam mit der Anfertigung des digitalen Abbilds der Messfläche M des Referenzobjekts 1 wird die Identifizierungsinformation aus dem RFID-Transponder des Referenzobjekts 1 ausgelesen und gemeinsam mit dem für das betreffende Referenzobjekt 1 ermittelte digitale Abbild und/oder mit der für das betreffende Referenzobjekt 1 ermittelten Lage des realen oder geometrischen Objekts relativ zum Referenzpunkt R des Referenzobjekts 1 in einer Datenbank gespeichert. Die Datenbank kann sich am Messwagen 10 befinden, oder auch extern an einer Fernüberwachungsstelle.

Das erfindungsgemäße Verfahren bedient sich bekannten Methoden zur Lagebestimmung, nutzt aber die erfindungsgemäße Ausführung des Referenzobjektes 1 für die exakte Ermittlung des Referenzpunktes R zur genaueren Lagebestimmung mithilfe des bildverarbeitenden Verfahrens der Kantenextraktion. Wie bereits ausgeführt wurde, kann mit einem solchen Verfahren bei einer eigens für die Kantenextraktion vorgesehenen Messfläche M wie jene des erfindungsgemäßen Referenzobjekts 1 eine sehr präzise Detektion der Grenzlinien 3 aus dem digitalen Abbild erfolgen. Nach der Lokalisierung der Grenzlinien 3 im digitalen Abbild können sie zur Ermittlung des erfindungsgemäßen Referenzpunktes R rechnerisch geschnitten werden. Mithilfe des auf diese Weise exakt ermittelten Referenzpunktes R kann in weiterer Folge auf bekannte Weise die Lagebestimmung der Gleisachse G erfolgen. Da die relative Lage L (siehe Fig. 3) des Sensors 9 zur Gleisachse G beispielsweise aus einer anfänglichen Kalibrierung bekannt ist und mithilfe des nun ermittelten Referenzpunktes R eine genaue Bestimmung der Relativlage RL zwischen Referenzobjekt 1 und dem Sensor 9 erfolgen kann, ist auch die Absolutposition der Gleislage G an dieser Stelle bekannt, da die Absolutposition des Referenzpunktes R bekannt ist.

Die lokal ermittelte Lage der Gleisachse G wird mit der für das betreffende Referenzobjekt 1 eindeutigen Identifizierungsinformation verknüpft und gespeichert. Wie in der Fig. 3 angedeutet ist, können auch beidseits eines Gleises jeweils ein Referenzobjekt 1 an Fahrleitungsmasten 8 angeordnet sein. In diesem Fall handelt es sich um zwei Referenzobjekte 1 mit unterschiedlicher Identifizierungsinformation. Freilich können die Referenzobjekte 1 auch an anderen Objekten montiert werden, etwa an Pfählen bei nicht-elektrifizierten Gleisabschnitten, an Brücken, Stützmauern, in Tunnelbereichen, an Bauwerken, Lärmschutzeinrichtungen oder Einhausungen, wie in der Fig. 4 anhand des Gebäudes 8' angedeutet wird.

Die Lagebestimmung wird beim Befahren des Gleises 11 für eine Vielzahl von entlang der Schienenanlage angeordneten Referenzobjekten 1 zur Generierung eines Datensatzes wiederholt, der für eine Gleisstrecke für jedes Referenzobjekt 1 und dessen bekannter Absolutkoordinaten eine eindeutige Zuordnung der für dieses Referenzobjekt 1 gemessenen Relativlage RL sowie die lokale Lage der Gleisachse G enthält. Wie in der Fig. 4 angedeutet ist, kann sich ein durch ein Referenzobjekt 1 repräsentierter Referenzpunkt R auch auf mehrere Gleise und deren jeweilige Gleisachsen Gn (n=1, 2, ...N) beziehen, im gezeigten Beispiel etwa zwei Gleise mit ihren jeweiligen Gleisachsen G1, G2 beispielsweise in einem Bahnhofsbereich, wobei die Zuordnung zu den jeweils betroffenen Gleisachsen G1, G2 über die Identifizierungsinformation in einer entsprechenden Datenbank organisiert ist und über eine entsprechende RFID-Abfrage abgerufen werden kann.

Diese digitale Darstellung der Schienenanlage eröffnet neue Möglichkeiten der Analyse. Zunächst kann die Gleisachse G errechnet werden und mit vorgegebenen Werten verglichen werden. Zudem ist es wie bereits erwähnt möglich, dass die Lagebestimmung für eine Vielzahl von entlang der Schienenanlage angeordneten Referenzobjekten R zur Generierung eines weiteren Datensatzes zu einem späteren Zeitpunkt wiederholt wird, und durch Vergleich der Datensätze bei einer einzelnen Abweichung der für ein Referenzobjekt 1 ermittelten Lage der Gleisachse G eine veränderte Lage des Referenzobjekts 1 ermittelt wird, und bei Abweichungen der für eine Mehrzahl an Referenzobjekten 1 ermittelten Lage der Gleisachse G eine veränderte Lage der Gleisachse G ermittelt wird.

Das erfindungsgemäße Verfahren eröffnet somit Möglichkeiten zur Qualitätssicherung und Qualitätskontrolle der Vermessung einer Gleisachse G, die bei herkömmlichen Messverfahren nicht zur Verfügung stehen.

Da zudem der plattenförmige Träger 4 mit seiner Montageseite direkt am Fahrleitungsmast 8 befestigt werden kann und somit flach am Fahrleitungsmast 8 anliegt, unterliegt das Referenzobjekt 1 kaum Verschmutzungen, und auch diese Verschmutzungen können abregnen. Auch gegenüber Beschädigungen ist das flach am Fahrleitungsmast 8 anliegende Referenzobjekt 1 weniger anfällig, als ein vom Fahrleitungsmast 8 in den Sicherheitsraum abstehender Bolzen 6. Zudem reduziert die erfindungsgemäße Ausführung der Messfläche M die Beeinträchtigung der Messung gegenüber Verschmutzung und Beschädigung, da die Messung auf bildverarbeitenden Verfahren der Kantenextraktion von Grenzlinien 3 aneinander grenzender Flächenbereiche 2.i des Referenzobjekts 1 beruht, und Verschmutzungen oder Beschädigungen auf das Messergebnis daher keine Auswirkungen haben, solange sich ein Schnittpunkt der Grenzlinien 3 oder deren Verlängerungen als Referenzpunkt R ermitteln lässt. Die erfindungsgemäße Ausführung der Messfläche M ermöglicht zudem eine eindeutige Definition des Referenzpunktes R, der bei jeder Messung neu detektiert wird, im Gegenteil zu herkömmlichen Verfahren auf Basis eines Bolzens 6, bei denen ein Referenzpunkt R zumeist durch Mittelung mit variierender Genauigkeit errechnet werden muss.

## Patentansprüche

1. Referenzobjekt (1) zur Lagebestimmung realer oder geometrischer Objekte von Schienenanlagen relativ zu einem Referenzpunkt (R) des Referenzobjektes (1) durch Detektion einer durch Wechselwirkung eines elektromagnetischen Messsignals mit dem Referenzobjekt (1) entstandenen Messgröße mittels aktiver und/oder passiver Sensoren (9), **dadurch gekennzeichnet, dass** es als plattenförmiger Träger (4) mit einer Montageseite und einer gegenüberliegenden Messseite ausgeführt ist, wobei der Träger (4) mit einem RFID-Transponder, dessen Datenspeicher eine den Träger (4) eindeutig identifizierende Identifizierungsinformation enthält, versehen ist, und die Oberfläche des plattenförmigen Trägers (4) auf der Messseite eine Messfläche (M) mit aneinander grenzenden Flächenbereichen (2.i; i=1,2,...N), die jeweils in Wechselwirkung mit dem Messsignal einer konstanten Messgröße entsprechen, die sich für aneinander grenzende Flächenbereiche (2.i) unterscheidet, aufweist, und die Grenzlinien (3) aneinander grenzender Flächenbereiche (2.i) oder deren Verlängerungen sich in einem für den Träger (4) eindeutigen Referenzpunkt (R) für die Lagebestimmung schneiden.

2. Referenzobjekt (1) nach Anspruch 1, **dadurch gekennzeichnet, dass** die aneinander grenzenden Flächenbereiche (2.i) jeweils sektorenförmig mit radial auf den den Referenzpunkt (R) bildenden, gemeinsamen Schnittpunkt zulaufenden Grenzlinien (3) ausgeführt sind.

3. Referenzobjekt nach Anspruch 1 oder 2, **dadurch gekennzeichnet, dass** die aneinander grenzenden Flächenbereiche (2.i) als weiße und schwarze Flächenbereiche (2.i) ausgeführt sind, wobei die Grenzlinien (3) jeweils einen schwarzen von einem weißen Flächenbereich (2.i) trennen.

4. Referenzobjekt nach Anspruch 1 oder 2, **dadurch gekennzeichnet, dass** die Messfläche (M) Reflexionsbereiche (7) aufweist, die symmetrisch um den Referenzpunkt (R) angeordnet sind und eine im Vergleich zu den verbleibenden Bereichen der Messfläche (M) erhöhte Reflektivität aufweisen.

5. Verfahren zur Lagebestimmung realer oder geometrischer Objekte von Schienenanlagen relativ zu einem Referenzpunkt (R) eines Referenzobjekts (1) gemäß einem der Ansprüche 1 bis 4, wobei von relativ zum realen oder geometrischen Objekt in bekannter relativer Lage (L) liegenden aktiven und/oder passiven Sensoren (9) mit dem Referenzobjekt (1) wechselwirkende elektromagnetische Messsignale ausgewertet und Messgrößen gewonnen werden, aus denen die Relativlage (RL) der Sensoren (9) zum Referenzpunkt (R) ermittelt wird, **dadurch gekennzeichnet, dass** mittels der aktiven und/oder passiven Sensoren ein digitales Abbild der Messfläche (M) des Referenzobjekts (1) erzeugt wird, und mithilfe des bildverarbeitenden Verfahrens der Kantenextraktion die Grenzlinien (3) aneinander grenzender Flächenbereiche (2.i) sowie der Schnittpunkt der Grenzlinien (3) oder deren Verlängerungen als Referenzpunkt (R) aus dem digitalen Abbild ermittelt werden, wobei die Identifizierungsinformation aus dem RFID-Transponder des Referenzobjekts (1) ausgelesen und gemeinsam mit der für das Referenzobjekt (1) ermittelten Lage des realen oder geometrischen Objekts relativ zum Referenzpunkt (R) des Referenzobjekts (1) in einer Datenbank gespeichert wird.

6. Verfahren nach Anspruch 5, **dadurch gekennzeichnet, dass** das digitale Abbild der Messfläche (M) des Referenzobjekts (1) mithilfe eines Kamerasystems in Stereo- oder Mehrfachanordnung erzeugt wird.

7. Verfahren nach Anspruch 5 oder 6, **dadurch gekennzeichnet, dass** die Lagebestimmung für eine Vielzahl von entlang der Schienenanlage angeordneten Referenzobjekten (1) zur Generierung eines Referenzpunkt-Datensatzes mit einer Vielzahl an Referenzpunkten (R) entlang der Schienenanlage wiederholt wird.

8. Verfahren nach Anspruch 7, **dadurch gekennzeichnet, dass** die Lagebestimmung für eine Vielzahl von entlang der Schienenanlage angeordneten Referenzobjekten (1) zur Generierung eines weiteren Referenzpunkt-Datensatzes zu einem späteren Zeitpunkt wiederholt wird, und durch Vergleich der Referenzpunkt-Datensätze bei einer einzelnen Abweichung der für ein Referenzobjekt (1) ermittelten Lage des realen oder geometrischen Objekts eine veränderte Lage des Referenzobjekts (1) ermittelt wird, und bei Abweichungen der für eine Mehrzahl an Referenzobjekten (1) ermittelten Lage des realen oder geometrischen Objekts eine veränderte Lage des realen oder geometrischen Objekts ermittelt wird.

## Claims

1. Reference object (1) for determining the position of real or geometric objects of railway systems relative to a reference point (R) of the reference object (1) by detecting a measured quantity generated by the interaction of an electromagnetic measurement signal with the reference object (1) by means of active and/or passive sensors (9), **characterized in that** it is designed as a plate-shaped carrier (4) with a mounting side and an opposite measuring side, wherein the carrier (4) is provided with an RFID transponder whose data storage contains identification information that uniquely identifies the carrier (4), and the surface of the plate-shaped carrier (4) on the measuring side has a measuring surface (M) with adjacent surface areas (2.i; i=1,2,...N), each of which, in interaction with the measurement signal, corresponds to a constant measured quantity that differs for adjacent surface areas (2.i), and the boundary lines (3) of adjacent surface areas (2.i) or their extensions intersect in a unique reference point (R) for the carrier (4) for determining position.

2. Reference object (1) according to claim 1, **characterized in that** the adjacent surface areas (2.i) are each sector-shaped with boundary lines (3) converging radially towards the common intersection point forming the reference point (R).

3. Reference object according to claim 1 or 2, **characterized in that** the adjacent surface areas (2.i) are designed as white and black surface areas (2.i), wherein the boundary lines (3) each separate a black from a white surface area (2.i).

4. Reference object according to claim 1 or 2, **characterized in that** the measuring surface (M) has reflection areas (7) which are arranged symmetrically around the reference point (R) and have an increased reflectivity compared to the remaining areas of the measuring surface (M).

5. Method for determining the position of real or geometric objects of railway systems relative to a reference point (R) of a reference object (1) according to one of claims 1 to 4, wherein electromagnetic measurement signals interacting with the reference object (1) are evaluated by active and/or passive sensors (9) located in a known relative position (L) relative to the real or geometric object, and measured values are obtained from which the relative position (RL) of the sensors (9) to the reference point (R) is determined, **characterized in that** a digital image of the measurement surface (M) of the reference object (1) is generated by means of the active and/or passive sensors, and the boundary lines (3) of adjacent surface areas (2.i) as well as the intersection of the boundary lines (3) or their extensions as the reference point (R) are determined from the digital image using the image processing method of edge extraction, wherein the identification information from the RFID transponder of the reference object (1) is read out and, together with the position determined for the reference object (1), of the real or geometric object relative to the reference point (R) of the reference object (1) is stored in a database.

6. Method according to claim 5, **characterized in that** the digital image of the measuring surface (M) of the reference object (1) is generated using a camera system in stereo or multiple arrangement.

7. Method according to claim 5 or 6, **characterized in that** the position determination for a plurality of reference objects (1) arranged along the track system is repeated to generate a reference point data set with a plurality of reference points (R) along the track system.

8. Method according to claim 7, **characterized in that** the position determination for a plurality of reference objects (1) arranged along the rail system is repeated at a later time to generate a further reference point data set, and by comparing the reference point data sets, in the event of a single deviation of the position of the real or geometric object determined for a reference object (1), a changed position of the reference object (1) is determined, and in the event of deviations of the position of the real or geometric object determined for a plurality of reference objects (1), a changed position of the real or geometric object is determined.

## Revendications

1. Objet de référence (1) destiné à déterminer la position d'objets réels ou géométriques d'installations ferroviaires par rapport à un point de référence (R) de l'objet de référence (1) par la détection d'une grandeur de mesure résultant de l'interaction entre un signal de mesure électromagnétique et l'objet de référence (1) à l'aide de capteurs (9) actifs et/ou passifs, **caractérisé en ce qu'**il est réalisé sous la forme d'un support en forme de plaque (4) avec une face d'installation et une face de mesure opposée, dans lequel le support (4) est pourvu d'un transpondeur RFID, dont le stockage de données contient des informations d'identification qui identifient de manière unique le support (4), et la surface du support en forme de plaque (4) sur la face de mesure présente une surface de mesure (M) avec des régions de surface adjacentes (2.i; i = 1,2,...N) qui correspondent chacune à une grandeur de mesure qui est constante en interaction avec le signal de mesure et est différente pour des régions de surface adjacentes (2.i) et, pour la détermination de la position, les lignes de délimitation (3) de régions de surface adjacentes (2.i) ou de leurs extensions se croisent dans un point de référence (R) unique pour le support (4).

2. Objet de référence (1) selon la revendication 1, **caractérisé en ce que** les régions de surface adjacentes (2.i) sont chacune réalisées en forme de secteur avec des lignes de délimitation (3) convergeant radialement sur le point d'intersection commun formant le point de référence (R).

3. Objet de référence selon la revendication 1 ou 2, **caractérisé en ce que** les régions de surface adjacentes (2.i) sont réalisées sous la forme de régions de surface blanches et noires (2.i), dans lequel les lignes de délimitation (3) séparent chacune une région de surface noire d'une région de surface blanche (2.i).

4. Objet de référence selon la revendication 1 ou 2, **caractérisé en ce que** la surface de mesure (M) présente des régions de réflexion (7) qui sont disposées symétriquement autour du point de référence (R) et présentent une réflectivité accrue par rapport aux régions restantes de la surface de mesure (M).

5. Procédé destiné à déterminer la position d'objets réels ou géométriques d'installations ferroviaires par rapport à un point de référence (R) d'un objet de référence (1) par la détection d'une grandeur de mesure résultant de l'interaction selon l'une des revendications 1 à 4, dans lequel des signaux de mesure électromagnétiques interagissant avec l'objet de référence (1) sont évalués par des capteurs (9) actifs et/ou passifs situés dans une position relative connue (L) par rapport à l'objet réel ou géométrique et des grandeurs de mesure sont obtenues à partir desquelles la position relative (RL) des capteurs (9) par rapport au point de référence (R) est déterminée, **caractérisé en ce qu'**une image numérique de la surface de mesure (M) de l'objet de référence (1) est générée à l'aide des capteurs actifs et/ou passifs et, en utilisant la méthode de traitement d'images d'extraction de contours, les lignes de délimitation (3) de régions de surface adjacentes (2.i) ainsi que le point d'intersection des lignes de délimitation (3) ou de leurs extensions en tant que point de référence (R) sont déterminés à partir de l'image numérique, dans lequel les informations d'identification sont lues à partir du transpondeur RFID de l'objet de référence (1) et, conjointement avec la position de l'objet réel ou géométrique déterminée pour l'objet de référence (1) par rapport au point de référence (R) de l'objet de référence (1), sont stockées dans une base de données.

6. Procédé selon la revendication 5, **caractérisé en ce que** l'image numérique de la surface de mesure (M) de l'objet de référence (1) est générée à l'aide d'un système de caméra en configuration stéréo ou multiple.

7. Procédé selon la revendication 5 ou 6, **caractérisé en ce que** la détermination de position d'une pluralité d'objets de référence (1) disposés le long de l'installation ferroviaire est répétée pour générer un ensemble de données de points de référence avec une pluralité de points de référence (R) le long de l'installation ferroviaire.

8. Procédé selon la revendication 7, **caractérisé en ce que** la détermination de position d'une pluralité d'objets de référence (1) disposés le long de l'installation ferroviaire est répétée pour générer un autre ensemble de données de points de référence à un moment ultérieur et la comparaison des ensembles de données de points de référence permet de déterminer une position modifiée de l'objet de référence (1) s'il y a un seul écart entre la position de l'objet réel ou géométrique déterminée pour un objet de référence (1) et permet de déterminer une position modifiée de l'objet réel ou géométrique s'il y a des écarts entre la position de l'objet réel ou géométrique déterminée pour une pluralité d'objets de référence (1).
